# EUROPÄISCHE PATENTSCHRIFT

(11) **EP 2 464 677 B1**
(45) Veröffentlichungstag und Bekanntmachung des Hinweises auf die Patenterteilung: **26.11.2014**
(21) Anmeldenummer: 10739303.5
(22) Anmeldetag: 28.07.2010
(51) Int. Cl.: C08G 18/10, C08G 18/18, C08G 18/48, C08G 18/73, C08G 18/78, C08G 18/79, C09J 175/04

(54) **ISOCYANATGRUPPEN ENTHALTENDE PREPOLYMERE MIT GUTER LAGERSTABILITÄT**
STORAGE STABLE PREPOLYMERS CONTAINING ISOCYANATE GROUPS
PREPOLYMÈRES COMPORTANT DES FONCTIONS ISOCYANATE STABLES AU STOCKAGE

(30) Priorität: 11.08.2009 DE 102009037009
(43) Veröffentlichungstag der Anmeldung: 20.06.2012
(73) Patentinhaber: Bayer Intellectual Property GmbH, 40789 Monheim (DE)
(72) Erfinder: PEIFFER, Evelyn, 51375 Leverkusen (DE); KARAFILIDIS, Christos, 51375 Leverkusen (DE); WINTERMANTEL, Matthias, 51465 Bergisch Gladbach (DE); WAMPRECHT, Christian, 41472 Neuss (DE)
(74) Vertreter: BIP Patents
(86) Internationale Anmeldenummer: PCT/EP2010/004616
(87) Internationale Veröffentlichungsnummer: WO 2011/018162

(56) Entgegenhaltungen:
- DE-A1-102006 020 605
- US-A- 5 369 208
- US-A1- 2002 013 406

## Beschreibung

Gegenstand der Erfindung sind unter dem Einfluss von Feuchtigkeit aushärtende 1K-Systeme basierend auf aliphatischen Prepolymeren mit guter Lagerfähigkeit, in weiten Grenzen einzustellender Verarbeitbarkeit und rascher Durchhärtung.

Feuchtehärtende isocyanatendständige Prepolymere auf Basis aromatischer Polyisocyanate wie beispielsweise TDI und vorzugsweise MDI werden abhängig von ihrem Isocyanatgehalt in weiten Bereichen der industriellen und Do-it-yourself (DIY)-Anwendung als Klebstoffe, Dichtstoffe und Beschichtungsstoffe eingesetzt.

Beispiele seien das Verkleben von Holz, die Herstellung von Sandwichkonstruktionen aus beispielsweise Holz- oder Aluminiumplatten mit Isoliermaterialien wie Steinwolle, EPS oder PUR-Hartschaumstoffen zu Isolierelementen wie sie im Containerbau eingesetzt werden, die Herstellung von Automobildachhimmelkonstruktionen aus einem thermoplastischen PUR-Schaum, einem Glasfaservlies und einem Dekorgewebe, wobei das NCO-Prepolymer die Schichten miteinander verklebt aber auch den Gesamtverbund zusätzlich verstärkt, oder auch die Verfestigung von lockeren Gesteinsformationen im Straßenbau. Bevorzugte NCO-Bereiche für dieses Marktsegment sind NCO-Gehalte von ca. 12 bis 18 Gew.-%.

NCO-terminierte Prepolymere mit NCO-Gehalten von ca. 6 bis 12 Gew.-% ergeben flexiblere Polyurethane nach der Aushärtung und sind demnach zur Herstellung von mehr flexiblen Verbundstoffen geeignet, wie beispielsweise der Herstellung von Gummigranulat Compounds als Bodenelemente für Kinderspielplätze.

Noch flexiblere Polyurethane werden mit Isocyanat terminierten Prepolymeren mit Isocyanatgehalten von 1 bis 5 Gew.-% erhalten, die beispielsweise einen großen Einsatz als Baudichtstoffe oder als Klebdichtstoffe in der Automobilindustrie zum Einkleben der Winschutzscheiben, etc. finden.

Eine neue Klasse von PUR Klebstoffen sind die reaktiven PUR Hotmelts, die bei Isocyanatgehalten von 2 bis 5 Gew.-%, abhängig vom verwendeten Polyol auch zu sehr steifen PUR führen können.

All diesen Prepolymeren ist gemeinsam, dass die Reaktion von Wasser mit Isocyanatgruppen unter Kettenverlängerung zu Polyharnstoffsegmenten führt, die den erhaltenen Polyurethanen eine hohe Festigkeit mit hervorragenden physikalischen Eigenschaften (wie Zähigkeit, Thermostabilität, etc.) verleihen.

Der wesentliche Vorteil der Prepolymere ist der, dass es sich um Einkomponentensysteme handelt, weil die Reaktion mit Wasser sehr sicher abläuft und keine aufwendigen Stöchiometriebetrachtungen erfordert, wie sie bei Zweikomponentensystemen erforderlich sind. Die Reaktion führt immer, auch bei einem großen Überschuss an Wasser zu einem ausgehärteten Polyurethan. Als Reaktionspartner reicht normalerweise die vorhandene Luft- und/oder Substratfeuchtigkeit aus, es kann aber auch, insbesondere bei dichten Deckschichten wie beispielsweise Aluminiumprofilen mit Wasser benebelt werden.

Für den praktischen Einsatz wird durch Zugabe von Katalysatoren die offene Zeit der Systeme eingestellt. Unter der offenen Zeit versteht man die Zeit in der die Systeme nach Applikation auf die zu verklebenden Substrate noch gut verarbeitbar sind. Der Begriff "verarbeitbar" ist für jeden Einsatz neu zu definieren. Bei Klebstoffen ist die Verarbeitbarkeit im allgemeinen durch die Zeit definiert wie zwei Substrate noch problemlos gefügt werden können. Wird die Verarbeitungszeit überschritten, sind die optimalen Eigenschaften wie beispielsweise eine Neupositionierung im Allgemeinen nicht mehr erreichbar.

Die Zeit, die vom Ende der Verarbeitungszeit bis zum Erreichen der optimalen Endeigenschaften notwendig ist, sollte möglichst kurz sein, denn übermäßig lange Wartezeiten bedeuten in der Praxis immer höhere Kosten, wie beispielsweise längere Verweilzeiten in der Presse, etc.

Die Länge der Verarbeitungszeit lässt sich in der Praxis durch Einsatz von Katalysatoren im Prinzip beliebig steuern, jedoch wird gleichzeitig durch alle Katalysatoren auch die Lagerfähigkeit der Systeme (ohne Wasserzutritt) negativ beeinflusst, so dass sehr schnell eingestellte Systeme auch eine begrenzte Lagerfähigkeit aufweisen, was die Logistik der Produkte beeinträchtigt. Die begrenzte Lagerfähigkeit zeigt sich vornehmlich in einem starken Anstieg der Viskosität , die bis zur Gelierung gehen kann. Auf der anderen Seite erlauben einige Katalysatoren zwar eine gute Steuerung der Verarbeitungszeit, ergeben aber eine übermäßig lange Aushärtezeit der Systeme. Dies bedeutet in der Regel, dass die Teile zwischengelagert werden müssen, ehe die weiterverarbeitet werden können.

Eine Übersicht von Katalysatoren findet sich beispielsweise bei A. Farkas und G.A. Mills, Adva. Catalysis, 13, 393 (1962), J.H. Saunders und K.C. Frisch, Polyurethanes, Part I, Wiey-Interscience, New York, 1962, Chap. VI, K.C. Frisch und L.P. Rumao, J. Macromol. Sci.-Revs. Macromol. Chem. , C5 (1), 103 - 150 (1970), oder G. Woods, The ICI Polyurethane Book, John Wiley & Sons, S. 41 - 45, 1987.

Gebräuchliche Katalysatoren sind die in der Polyurethanchemie bekannten Produkte, wie tert. aliphatische Amine und/oder Metallkatalysatoren.

So zeigen Metallkatalysatoren wie beispielsweise Dibutylzinndilaurat eine hervorragende Beschleunigung der Wasserreaktion mit Isocyanatgruppen enthaltenden Prepolymeren verbunden auch mit einer guten Durchhärtung, jedoch wird im gleichen Maße auch die Lagerfähigkeit negativ beeinflusst. Eine Verbesserung wird zwar in der EP-A 0 132 675 durch die "Blockierung" des Katalysators durch Zugabe von Tosylisocyanat erreicht, jedoch reichen geringste Feuchtigkeitsspuren bereits aus, diese Blockierung aufzuheben, was in Summe zwar in einer verbesserten aber immer noch unzureichenden Lagerfähigkeit resultiert.

Meist wird in der Praxis eine Mischung verschiedener Katalysatoren eingesetzt, um die Kombination aller Eigenschaften weitestgehend zu erreichen.

Ein genereller Nachteil der Prepolymere auf Basis aromatischer Polyisocyanate ist die Neigung der Endprodukte zu einer starken Verfärbung unter Lichteinfluss, die für viele Anwendungen prohibitiv ist. Ein allgemein anerkanntes Prinzip diesen Nachteil zu Eliminieren ist die Verwendung von geeigneten Additiven, wie beispielsweise Kombinationen von sterisch gehinderten Phenolen und sterisch gehinderten aliphatischen Aminen ("HALS-Typen"), die jedoch nur eine graduelle Verbesserung darstellen. Eine grundsätzliche Verbesserung stellt die Verwendung von aliphatischen Polyisocyanaten, wie beispielsweise Hexamethylendiisocyanat, Isophorondiisocyanat oder 4,4'-Diisocyanato-dicyclohexylmethan in Form seiner sterischen Isomerengemische oder vorstehende Disisocyanate in Form ihrer Derivate dar.

Bei diesen Polyisocyanaten zeigt sich aber, dass im Gegensatz zu den aromatischen Polyisocyanaten die Reaktion mit Wasser nur sehr träge abläuft.

Man benötigt sehr hohe Konzentrationen an Metallkatalysatoren wie beispielsweise Dibutylzinndilaurat oder Wismutsalzen, um die Reaktion überhaupt zu katalysieren. Katalysatorkonzentrationen in dieser Höhe wirken sich aber immer negativ auf die Langzeitgebrauchseigenschaften, wie beispielsweise die Hydrolysebeständigkeit von beispielsweise Polyester basierten Klebstoffen, aus. Die bei den Klebstoffen auf Basis aromatischer Polyisocyanate als Katalysatoren sehr gebräuchlichen tert. aliphatischen Amine, wie beispielsweise 1,4-Diazabicyclooctan oder Dimorpholinodieethylether erweisen sich ebenfalls als wenig katalytisch wirksam, vgl. L. Havenith in Paint Manufacture, Dezember 1968, S. 33-38, insbesondere S. 34. Ein zusätzliches Problem bei diesen Katalysatoren ist die Migrationsfähigkeit bei den ausgehärteten Systemen. Dies ist besonders bei Systemen mit Lebensmittelkontakt höchst unerwünscht.

Ebenfalls diskutiert werden in der Literatur technisch sehr aufwendige Verfahren, in denen die zu härtenden Systeme, vornehmlich Beschichtungen in dünner Schicht in Kammern mit Feuchtigkeit in Anwesenheit von leichtflüchtigen tert. aliphatischen Aminen, wie beispielsweise Trimethylamin, und eventuell erhöhter Temperatur gehärtet werden. Da durch diese Vorgehensweise sehr hohe Katalysatorkonzentrationen verwendet werden können, ohne dass diese im Produkt verbleiben, bestehen die vorstehend beschriebenen Probleme nicht.

In DE-A 10 2006 020 605 wird Bis(dimethylaminoethyl)ether als Katalysator für die Feuchtereaktion von aliphatischen 1 K-Polyurethansystemen beschrieben. Es werden dabei 1 K-Feuchtehärtende

Polyurethansysteme erhalten, die bei guter Lagerstabilität eine hohe Reaktionsgeschwindigkeit in der Reaktion mit Feuchtigkeit/Wasser aufweisen. Jedoch ist Bis(dimethylaminoethyl)ether als giftig eingestuft und kann zudem aus dem ausgehärteten Polyurethan heraus migrieren oder verdampfen, da Bis(dimethylaminoethyl)ether nicht kovalent an das polymere Polyurethan angebunden wird. Deshalb müssen Zubereitungen mit einem Gehalt von > 1% Bis(dimethylaminoethyl)ether als giftig gekennzeichnet werden. Generell sind Zubereitungen, die giftige Stoffe enthalten, aus Gründen des Arbeitsschutzes und in bestimmten sensitiven Anwendungen nicht erwünscht.

Gesucht werden also Katalysatoren die bei guter Steuerung der Verarbeitungszeit die Lagerfähigkeit der Systeme nur in geringem Maße beeinträchtigen aber gleichzeitig eine schnelle Durchhärtung ermöglichen und anschließend nicht aus dem System migrieren können oder giftig sind.

Gegenstand der vorliegenden Erfindung sind somit 1K-Systeme basierend auf Isocyanatgruppen enthaltenden Prepolymeren auf Basis aliphatischer Polyisocyanate mit Isocyanatgehalten von 1 bis 20 Gew.-%, dadurch gekennzeichnet, dass als Katalysator N,N,N'-Trimethyl-N'-hydroxyethylbis(aminoethyl)ether als Katalysator alleine verwendet oder neben anderen Katalysatoren mitverwendet wird.

N,N,N'-Trimethyl-N'-hydroxyethylbis(aminoethyl)ether zeigt als Katalysator überraschend ein ausgewogenes Verhältnis von Verarbeitungszeit zu Durchhärtezeit bei einem nur geringen Einfluss auf die Thermostabilität der Isocyanatgruppen terminierten Prepolymere auf Basis aliphatischer Polyisocyanate. Es zeigt sich, dass dieser ausgewählte Katalysator über die Hydroxylgruppe an das Prepolymer angebunden wird.

Als NCO-terminierte Prepolymere mit Isocyanatgehalten von 1 bis 20 Gew.-%, vorzugsweise 2 bis 16 Gew.-% sind Umsetzungsprodukte von aliphatischen Polyisocyanaten mit Hydroxylpolycarbonaten, Hydroxylpolyestern und/oder Hydroxylpolyethern zu verstehen, die als solche oder formuliert mit Weichmachern, Füllstoffen, Rheologiehilfsmitteln über die Reaktion mit Luft- und/oder Substratfeuchtigkeit zu hochmolekularen Polyurethanpolyharnstoffen aushärten.

Unter den in Frage kommenden aliphatischen Polyisocyanaten sind insbesondere Hexamethylendiisocyanat, Isophorondiisocyanat und 4,4'-Diisocyanato-dicyclohexylmethan in Form seiner sterischen Isomerengemische zu verstehen. Mit eingeschlossen sind selbstverständlich auch die Verwendung, bzw. Mitverwendung der vorstehend erwähnten Disisocyanate in Form ihrer Derivate, wie beispielsweise Urethane, Biurete, Allophanate, Uretdione und Trimerisate und Mischformen dieser Derivatisierungen.

Unter den Hydroxylpolycarbonaten sind Umsetzungsprodukte von Glykolen vom Typ Ethylenglykol, Diethylenglykol, 1,2-Propylenglykol, Butandiol-1,4, Neopentylglykol oder Hexandiol-1,6 und/oder Triolen wie beispielsweise Glyzerin, Trimethylolpropan, Pentaerythrit oder Sorbit mit Diphenyl- und/oder Dimethylcarbonat zu verstehen. Die Umsetzung ist eine Kondensationsreaktion, bei der Phenol und/oder Methanol abgespalten werden. Es resultieren, je nach Zusammensetzung, flüssige bis wachsartige, amorphe Typen mit Tg-Werten von > -40°C oder kristalline Polycarbonatpolyole mit Schmelzbereichen von 40-90°C. Der Molekulargewichtsbereich liegt bei 200 bis 10000. Der Molekulargewichtsbereich von 400 bis 5000 wird bevorzugt. Der Molekulargewichtsbereich von 500 bis 3000 wird besonders bevorzugt.

Unter den Hydroxylpolyestern sind Umsetzungsprodukte von aliphatischen Dicarbonsäuren, wie beispielsweise Adipin-, Azelain-, Sebazin und/oder Dodekandisäure und/oder aromatischen Dicarbonsäure, wie Ortho-, Iso oder Terephthalsäure mit Glykolen vom Typ Ethylenglykol, Diethylenglykol, 1,2-Propylenglykol, Butandiol-1,4, Neopentylglykol oder Hexandiol-1,6 und/oder Polyolen wie beispielsweise Glyzerin oder Trimethylolpropan, Petaerythrit oder Sorbit zu verstehen. Die Umsetzung ist eine normale Schmelzkondensation, wie sie in Ullmanns Enzyklopädie der tech-nischen Chemie, "Polyester", 4. Auflage, Verlag Chemie, Weinheim, 1980, beschrieben wird. Es resultieren, je nach Zusammensetzung, flüssige, amorphe Typen mit Tg-Werten von > -40°C oder kristalline Polyesterpolyole mit Schmelzbereichen von 40-90°C. Der Molekulargewichtsbereich liegt bei 200 bis 30000. Der Molekulargewichs-bereich von 400 bis 5000 wird besonders bevorzugt. Der Molekulargewichtsbereich von 500 bis 5000 wird besonders bevorzugt.

Zu nennen sind hier auch insbesondere die Produkte, die sich von Umsetzungsprodukten von Glyzerin und Hydroxylfettsäuren ableiten, insbesondere Rizinusöl und seine Derivate, wie beispielsweise einfach dehy-dratisiertes Rizinusöl.

Zu nennen sind hier auch insbesondere die Produkte, die sich von Umsetzungsprodukten von Glyzerin und Hydroxylfettsäuren ableiten, insbesondere Rizinusöl und seine Derivate, wie beispielsweise einfach dehydratisiertes Rizinusöl.

Unter den Polyetherpolyolen sind insbesondere die normalerweise durch basenkatalysierte Addition von Propylen- und/oder Ethylenoxid an Startmoleküle, wie beispielsweise Wasser, Propandiol-1,2, 2,2-Bis(4-hydroxyphenyl)propan, Glyzerin, Trimethylolpropan, Triethanolamin, Ammoniak, Methylamin oder Ethylendiamin mit Molekulargewichten von 200 bis 6000, insbesondere 200 bis 5000 zu nennen. Insbesondere geeignet sind auch die Polypropylenetherpolyole, die über Doppelmetallcyanidkatalysatoren erhältlich sind, und den Aufbau von sehr hochmolekularen gut definierten Polyetherpolyolen mit Molekulargewichten bis zu 25000 ermöglichen. Möglich sind selbstverständlich auch die Polyetherpolyole mit darin dispergierten organischen Füllstoffen wie beispielsweise Additionsprodukten von Toluylendiisocyanat mit Hydrazinhydrat oder Copolymerisaten, wie z.B. von Styrol und Acrylnitril.

Einsetzbar sind auch die durch Polymerisation von Tetrahydrofuran erhältlichen Polytetramethylenetherglykole mit Molekuargewichten von 400 bis 4000, aber auch Hydroxylgruppen enthaltende Polybutadiene.

Es können selbstverständlich auch Mischungen der erwähnten Polyole in Mischung mit niedermolekularen Polyolen wie beispielsweise Ethylenglykol, Butandiol, Diethylenglykol oder Butendiol-1,4 eingesetzt werden.

Die vorstehend erwähnten Polyole können selbstverständlich mit allen Polyisocyanaten, aromatischen als auch alipatischen vor der eigentlichen Prepolymerisierung zu Urethan modifizierten Hydroxylverbindungen umgesetzt werden.

Die Herstellung der Isocyanat-terminierten Prepolymere erfolgt nach bekannten Methoden indem die Polyole mit einem stöchiometrischen Überschuss von aliphatischen Polyisocyanaten bei Temperaturen von 30 bis 150°C, vorzugsweise 60 bis 140°C zur Reaktion gebracht werden. Dies kann diskontinuierlich in Kesseln oder kontinuierlich in Kesselkaskaden oder über Mischer erfolgen.

Besonders bevorzugt ist, dass die Hydroxylverbindungen mit einem hohen Überschuss an Disiocyanaten umgesetzt werden und dass das noch vorhandene monomere Disocyanat nach bekannten Techniken, wie beispielsweise über einen Dünnschicht- oder Kurzwegverdampfer bei erhöhter Temperatur und vermindertem Druck dem Prepolymer entzogen wird. Man erhält auf diese Weise Prepolymere mit niedrigem Monomergehalt, die abhängig vom Restmonomergehalt zum Teil nicht mehr kennzeichnungspflichtig sind.

All diesen Produkten kann vor, während oder bevorzugt nach der Reaktion noch modifizierte aliphatische Polyisocyanate zur Optimierung der Eigenschaften zugesetzt werden. Solche Produkte befinden sich im Handel, wie beispielsweise unter den Namen Desmodur^{®} N 100 (HDI-Biuretmodifizierung) oder Desmodur^{®}N 3300 bzw. Desmodur^{®} N 3600 (HDI-Trimerisate) oder Desmodur^{®} Z 4470 (IPDI-Trimerisat) der BayerMaterialScience AG.

Je nach zu erwartender Endviskosität, die - abhängig von der Formulierung zwischen niedigviskos bis hochviskos variieren kann - kommen verschiedene Aggregate in Betracht.

Der Katalysator N,N,N'-Trimethyl-N'-hydroxyethylbis(aminoethyl)ether wird den Prepolymeren vor, während oder vorzugsweise nach der Beendigung der Prepolymerbildung zugesetzt.

Die zugesetzte Menge dieses Katalysators richtet sich nach der gewünschten Verarbeitungszeit. In der Regel reichen Mengen von 0,01 bis 3,0 Gew.-%, vorzugsweise 0,05 bis 2,0 Gew.-%, besonders bevorzugt 0,1 bis 1,5 Gew.-%, bezogen auf das Prepolymer, aus.

Den Prepolymeren können zusätzlich Lösungsmittel, Füllstoffe, Farbstoffe und Rheologiehilfsmittel zugesetzt werden wie sie in der Praxis bekannt sind.

Als Füllstoffe seien beispielhaft Kreide, Schwerspat, aber auch faserförmige Füllstoffe wie Polyamid- oder Polyacrylnitrilfasern erwähnt. Unter den Rheologiehilfsmitteln seien neben den industrieüblichen Zusätzen wie Aerosilen, Bentoniten oder hydriertem Rizinusöl auch niedermolekulare Amine genannt, die in Kombination mit Polyisocyanaten sehr rasche eine Strukturviskosität aufbauen. Bei all diesen Zusätzen ist auf unbedingten Ausschluss von Feuchtigkeit zu achten, da dadurch eine vorzeitige Reaktion im Gebinde eintreten würde.

Auftrag der Kleb-, Beschichtungs- und Dichtstoffe erfolgt beispielsweise durch Rakeln, Spachteln, Sprühen, Rollen, Pinseln, Flachdüsenextrusion oder auch in kompakterer Form in Form einer Raupe.

Eine gute Methode zur Beurteilung der unterschiedlichen Aushärtephasen von solchen Systemen ist beispielsweise mit Hilfe von käuflichen Geräten, wie beispielsweise Drying Recorder BK 10 (The Mickle Laboratory Engeneering Co. Ltd.) möglich, die in der Lack-, Klebstoff- und Dichtstoffindustrie weit verbreitet sind. Hierbei wird eine nötigenfalls mit einem Gewicht belastete Nadel mit konstanter Geschwindigkeit durch einen dünnen Film des zu begutachtenden Prepolymers auf einem Träger (z.B. Glasplatte) geführt. Man beobachtet drei Phasen, die definitionsgemäß mit den Begriffen "Verarbeitungszeit" und "Durchhärtezeit" bezeichnet werden.

Zu Anfang läuft die Nadel durch den flüssigen Film und die Spur der Nadel verläuft mehr oder weniger vollständig, was mit der Verarbeitungszeit zu korrelieren ist. Das Ende der Verarbeitungszeit, auch als Hautbildungszeit, offene Zeit oder Kontaktklebrigkeitszeit bezeichnet, wird durch das erste Auftreten einer permanenten Spur der Nadel angezeigt.

Nun folgt eine mehr oder weniger lange Strecke (entsprechend vergangener Zeit), bei der die Nadel eine Spur hinterlässt. Wenn der Film genügend durchgehärtet ist, ist die Nadel nicht mehr in der Lage den Polymerfilm zu durchdringen, die Nadel läuft spurenfrei über den Polymerfilm, was messtechnisch als Durchhärtezeit zu bezeichnen ist. Der Beginn dieses Zustandes hängt messtechnisch selbstverständlich neben der generellen Zusammensetzung des Klebstoffs mit dem Gewicht zusammen, mit dem die Nadel belastet wird und kann somit nicht gleichbedeutend mit der Zeit sein, in der das Polymer seine Endeigenschaften erreicht hat. Der Zeitpunkt korreliert aber recht gut mit Begriffen wie beispielsweise Erreichen der "Handfestigkeit", "Knickfestigkeit", etc.

Der Praktiker wünscht sich die Zeitspanne zwischen dem Ende der Verarbeitungszeit und dem Erreichen der Durchhärtezeit möglichst kurz.

Die Verkürzung dieser Zeitspanne bei möglichst beliebiger Verarbeitungszeit und möglichst unbeeinträchtigter Lagerfähigkeit von NCO-terminierten Prepolymeren ist Gegenstand der Erfindung.

Gegenstand der Erfindung ist auch die Verwendung so katalysierter Prepolymere als Klebstoffe und/oder Dichtstoffe und/oder Beschichtungsstoffe, bei denen es auf die Aushärtung der aliphatischen Isocyanatgruppen mit Feuchtigkeit ankommt. Mögliche Anwendungen unter anderem sind das Kleben von Holzkörpern, wie beispielsweise Keilzinken, Brettschichthölzern oder Balken. Ebenso sind die Verklebung von Holzspänen, Holzfasern oder Holzmehl zu Platten oder Formkörpern möglich. Bei diesen Anwendungen sind Prepolymere mit Isocyanatgehalten von ca. 10 bis 20 % besonders geeignet. Niedrigere Isocyanatgehalte sind mehr für niedermodulige Polymere geeignet, wie beispielsweise für den Einsatz von nichtverfärbenden hellen Fugendichtstoffen oder für den Bereich der reaktiven PUR-Hotmelts geeignet, bei denen ein solches Prepolymer bei Temperaturen von oberhalb 80°C appliziert wird und beim Abkühlen Festigkeit auf Grund physikalischer Vorgänge aufbaut und anschließend die Endreaktion mit Feuchtigkeit (vgl. EP-A 0 354 527) erfolgt

Die nachfolgenden Beispiele sollen die Erfindung erläutern.

### Beispiele:

### Experimenteller Teil:

### Beispiel 1

### Prepolymerherstellung (HDI)

1000 g (4,59 Mol) Polypropylenglykol mit einer Hydroxylzahl von 515 mg KOH/g stabilisiert mit 30 ppm Isophthaloyldichlorid und 11581 g (68,85 Mol) Hexamethylendiisocyanat (HDI) werden bei ca. 90 bis 100°C umgesetzt. Das Prepolymer zeigt am Ende der Reaktionszeit von 3 Stunden einen konstanten NCO-Gehalt von 42,6 %.

Bei 90 °C werden zur Allophanatisierung des Prepolymers 205 ppm Zinkethylhexanoat zugegeben. Das Allophanat zeigt am Ende der Reaktionszeit von 2 Stunden einen konstanten NCO-Gehalt von 36,9 %. Das mit 230 ppm Isophthalyldichlorid stabilisierte Allophanat wird dann bei 140°C und 0,1 mm Hg einen Kurzwegverdampfer weitgehend vom überschüssigen HDI-Monomeren destillativ befreit.

Man erhält ein niedrigviskoses Prepolymer mit einem Isocyanatgehalt von 17,6 % und einer Viskosität von 3260 mPas bei 23°C. Der HDI-Restmonomergehalt beträgt 0,05 %.

### Beispiel 2

### Prepolymerherstellung (HDI)

1000 g (4,59 Mol) Polypropylenglykol mit einer Hydroxylzahl von 515 mg KOH/g und 3850 g (22,94 Mol) Hexamethylendiisocyanat (HDI) werden bei ca. 80 bis 90°C umgesetzt.

Das Prepolymer zeigt am Ende der Reaktionszeit von 9 Stunden einen konstanten NCO-Gehalt von 13,2 %. Das Prepolymer wird dann bei 180°C und 0,1 mm Hg über einen Kurzwegverdampfer weitgehend vom überschüssigen HDI-Monomeren destillativ befreit.

Man erhält ein mittelviskoses Prepolymer mit einem Isocyanatgehalt von 12,5 % und einer Viskosität von 4500 mPas bei 23°C. Der HDI-Restmonomergehalt beträgt 0,35 %.

### Beispiel 3

### Prepolymerherstellung (Desmodur^{®} N 3400)

1000 g (0,5 Mol) Polypropylenglykol mit einer Hydroxylzahl von 56 mg KOH/g und 2815 g (7,3 Mol) Desmodur® N 3400 der Bayer MaterialScience AG (Dimer von Hexamethylendiisocyanat mit 21,8 % NCO-Gehalt und 0,5 % freiem HDI-Monomer) werden katalysiert mit 20 ppm Dibutylzinndilaurat bei ca. 40°C umgesetzt.

Das Prepolymer zeigt am Ende der Reaktionszeit von 6 Stunden einen konstanten NCO-Gehalt von 14,9 %. Das Prepolymer wird dann mit 20 ppm Dibutylphosphat stabilisiert.

Man erhält ein niedrigviskoses Prepolymer mit einem Isocyanatgehalt von 14,9 % und einer Viskosität von 663 mPas bei 23°C. Der Gehalt an freiem HDI-Monomer beträgt 0,19 %.

### Beispiel 4

### Untersuchung am Drying Recorder (Versuchsbeschreibung)

Mittels eines Rakels (250 µm) wird ein Film auf eine vorher mit Ethylacetat gereinigte Glasplatte aufgetragen und sofort in den Drying Recorder eingelegt. Die Nadel wird mit 10 g belastet und bewegt sich über eine Zeitraum von 360 Minuten über eine Strecke von 35 cm.

Der Drying Recorder befindet sich in einem Klimaraum bei 23°C und 50 % rel. Luftfeuchte.

100 g des Prepolymeren aus Beispiel 1 werden mit verschiedenen handelsüblichen Katalysatoren so gemischt, dass sich mit dem Drying Recorder eine Verarbeitungszeit (sichtbares Auftreten einer permanenten Spur der Nadel im Film) von ca. 25 bis 60 Minuten ergibt.

Die Durchhärtezeit wird mit dem Zeitpunkt des Verschwindens der permanenten Spur der Nadel aus dem Film angegeben.

| **Beispiel 4** | **Prepolymer aus Beispiel** | **Katalysator** | **Menge [Gew%]** | **Durchhärtezeit [min]** |
|---|---|---|---|---|
| A | 1 | keiner | | >360 |
| B | 1 | DMDEE | 0,5 | >360 |
| C | 1 | DMDEE | 1,0 | >360 |
| D | 1 | DMDEE | 1,5 | >360 |
| E | 1 | Jeffkat ZF10 | 0,5 | 219 |
| F | 1 | Jeffkat ZF10 | 1,0 | 78 |
| G | 1 | Jeffkat ZF10 | 1,5 | 42 |
| H | 2 | keiner | | >360 |
| I | 2 | Jeffkat ZF10 | 0,5 | 97 |
| J | 2 | Jeffkat ZF10 | 1,0 | 52 |
| K | 2 | Jeffkat ZF10 | 1,5 | 48 |
| L | 3 | keiner | | >360 |
| M | 3 | Jeffkat ZF10 | 1,5 | 116 |

| | | | | |
|---|---|---|---|---|
| Legende: DMDEE 2,2'-Dimorpholinyldimethylether Jeffcat^{®} ZF 10 N,N,N'-Trimethyl-N'-hydroxyethylbis(aminoethyl)ether | | | | |

Wie man der Tabelle entnehmen kann werden nur mit dem erfindungsgemäßen Katalysator N,N,N'-Trimethyl-N'-hydroxyethylbis(aminoethyl)ether (Beispiel 4 E-G, 4 I-K und 4 M) bei Dosierungen von 0,5 - 1,5 Gew.-% stark verkürzte Durchhärtezeiten erreicht.

### Beispiel 5

Mit den Katalysatoren aus Beispiel 4 A und 4 E-M wurden Langzeitlagertests bei 50°C in ALU-Flaschen durchgeführt. Aliphatische Prepolymere sind als lagerstabil einzustufen, wenn sich deren Viskosität innerhalb von 14 Tagen Lagerung bei 50°C weniger als verdoppelt.

Die NCO-Gehalte und Viskositäten bei 25°C wurden bestimmt.

| **Beispiel 5** | **Rezeptur aus Beispiel** | **Viskosität nach 0/7/14Tagen** | **NCO-Gehalt nach 0/7/14 Tagen** |
|---|---|---|---|
| | | **[mPas]** | **[%]** |
| A | 4 A | 2440/2668/2809 | 17,15/17,14/17,07 |
| E | 4 E | 2443/2994/3423 | 17,51/16,56/16,22 |
| F | 4 F | 2112/3355/4134 | 16,69/15,88/15,45 |
| G | 4 G | 2845/3858/4280 | 16,27/15,40/15,11 |
| H | 4 H | 3077/3262/3429 | 12,72/10,82/13,32 |
| I | 4 I | 3240/3387/3509 | 12,31/11,17/13,05 |
| J | 4 J | 3472/3591/3706 | 12,04/11,78/12,71 |
| K | 4 K | 3656/3928/4030 | 11,59/11,18/10,46 |
| L | 4 L | 700/699/724 | 14,82/14,65/14,69 |
| M | 4 M | 785/842/890 | 13,59/13,35/13,37 |

Man beobachtet zwar eine leichte Beeinträchtigung der Lagerstabilität mit dem Katalysator Jeffcat^{®} ZF 10 gegenüber dem unkatalysierten Prepolymeren. Jedoch sind alle mit Jeffcat^{®} ZF 10 katalysierten Prepolymere aus anwendungstechnischer Sicht hinreichend lagerstabil.

## Patentansprüche

1. Mit Feuchtigkeit aushärtende Isocyanatgruppen enthaltende Prepolymere auf Basis aliphatischer Polyisocyanate mit Isocyanatgehalten von 2 bis 20 Gew.-% enthaltend N,N,N'-Trimethyl-N'-hydroxyethylbis(aminoethyl)ether als Katalysator.

2. Prepolymere nach Anspruch 1, **dadurch gekennzeichnet, dass** der Katalysator in einer Menge von 0,01 bis 3,0 Gew.-% bezogen auf das Prepolymere eingesetzt wird.

3. Prepolymere nach Anspruch 1, **dadurch gekennzeichnet, dass** der Katalysator in einer Menge von 0,5 bis 1,5 Gew.-% bezogen auf das Prepolymere eingesetzt wird.

4. Prepolymere nach Ansprüchen 1 bis 3, **dadurch gekennzeichnet, dass** deren Isocyanatgruppengehalt 3 bis 17 Gew.-% beträgt.

5. Prepolymere nach Ansprüchen 1 bis 4, **dadurch gekennzeichnet, dass** als aliphatisches Polyisocyanat Hexamethylendiisocyanat als monomeres Diisocyanat und/oder in Form seiner Derivate eingesetzt wird.

6. Prepolymere nach Ansprüchen 1 bis 5, **dadurch gekennzeichnet, dass** Isophorondisisocyanat als Isocyanat und/oder in Form seiner Derivate eingesetzt wird.

7. Prepolymere nach Ansprüchen 1 bis 6, **dadurch gekennzeichnet, dass** die sie einen Gehalt an monomeren Diisocyanaten von kleiner 1,0 % aufweisen.

8. Verwendung der Prepolymere nach Ansprüchen 1 bis 7 zur Herstellung von Kleb-, Beschichtungs- und Dichtstoffen.

9. Verwendung der Prepolymere der Ansprüche 1 bis 7 als in der Hitze applizierbare, beim Abkühlen Festigkeit aufbauende und dann mit Feuchtigkeit reagierende reaktive Polyurethanhotmeltsysteme.

10. Prepolymere nach Ansprüchen 1 bis 7 enthaltende Polyurethanhotmeltsysteme.

## Claims

1. Moisture-curing isocyanate-group-containing prepolymers based on aliphatic polyisocyanates having isocyanate contents of 2 to 20 wt.% and containing N,N,N'-trimethyl-N'-hydroxyethylbis(aminoethyl) ether as a catalyst.

2. Prepolymers according to claim 1, **characterised in that** the catalyst is used in an amount from 0.01 to 3.0 wt.%, relative to the prepolymer.

3. Prepolymers according to claim 1, **characterised in that** the catalyst is used in an amount from 0.5 to 1.5 wt.%, relative to the prepolymer.

4. Prepolymers according to claims 1 to 3, **characterised in that** their isocyanate group content is 3 to 17 wt.%.

5. Prepolymers according to claims 1 to 4, **characterised in that** hexamethylene diisocyanate as a monomeric diisocyanate and/or in the form of its derivatives is used as the aliphatic polyisocyanate.

6. Prepolymers according to claims 1 to 5, **characterised in that** isophorone diisocyanate as an isocyanate and/or in the form of its derivatives is used.

7. Prepolymers according to claims 1 to 6, **characterised in that** they have a content of monomeric diisocyanates of less than 1.0%.

8. Use of the prepolymers according to claims 1 to 7 to produce adhesives, coating compounds and sealants.

9. Use of the prepolymers according to claims 1 to 7 as reactive polyurethane hot melt systems which can be applied at high temperatures, which build up strength as they cool and which then react with moisture.

10. Polyurethane hot melt systems containing prepolymers according to claims 1 to 7.

## Revendications

1. Prépolymères contenant des groupes isocyanate, durcissant sous l'effet de l'humidité, à base de polyisocyanates aliphatiques présentant des teneurs en isocyanate de 2 à 20% en poids, contenant du N,N,N'-triméthyl-N'-hydroxyéthylbis(aminoéthyl)éther comme catalyseur.

2. Prépolymères selon la revendication 1, **caractérisés en ce que** le catalyseur est utilisé en une quantité de 0,01 à 3,0% en poids, par rapport aux prépolymères.

3. Prépolymères selon la revendication 1, **caractérisés en ce que** le catalyseur est utilisé en une quantité de 0,5 à 1,5% en poids, par rapport aux prépolymères.

4. Prépolymères selon les revendications 1 à 3, **caractérisés en ce que** leur teneur en groupes isocyanate est de 3 à 17% en poids.

5. Prépolymères selon les revendications 1 à 4, **caractérisés en ce qu'**on utilise comme polyisocyanate aliphatique de l'hexaméthylènediisocyanate en tant que diisocyanate monomère et/ou sous forme de ses dérivés.

6. Prépolymères selon les revendications 1 à 5, **caractérisés en ce que** de l'isophoronediisocyanate est utilisé en tant qu'isocyanate et/ou sous forme de ses dérivés.

7. Prépolymères selon les revendications 1 à 6, **caractérisés en ce qu'**ils présentent une teneur en diisocyanates monomères inférieure à 1,0%.

8. Utilisation des prépolymères selon les revendications 1 et 7 pour la préparation d'adhésifs, de substances de revêtement et d'étanchéité.

9. Utilisation des prépolymères selon les revendications 1 à 7 en tant que systèmes thermofusibles réactifs à base de polyuréthane applicables à chaud, acquérant de la solidité lors du refroidissement et réagissant ensuite avec l'humidité.

10. Système thermofusibles à base de polyuréthane contenant des prépolymères selon les revendications 1 à 7.
